# EUROPEAN PATENT SPECIFICATION

(11) **EP 2 837 955 B1**
(45) Date of publication and mention of the grant of the patent: **05.04.2023**
(21) Application number: 14162480.9
(22) Date of filing: 28.03.2014
(51) Int. Cl.: G01V 8/00

(54) **Millimetre wave three dimensional holographic scan imaging apparatus and method for inspecting a human body or an article**
Abbildungsvorrichtung mit dreidimensionaler holografischer Millimeterwellenabtastung und Verfahren zur Prüfung eines menschlichen Körpers oder eines Objekts
Dispositif d'imagerie à balayage holographique tridimensionnel à ondes millimétriques et procédé d'inspection d'un corps humain ou d'un article

(30) Priority: 15.08.2013 CN 201310356864
(43) Date of publication of application: 18.02.2015
(73) Proprietor: Nuctech Company Limited, TongFang Building, Shuangqinglu, Haidian District Beijing 100084 (CN)
(72) Inventor: Wu, Wanlong, 100084 Haidian District (CN); Chen, Zhiqiang, 100084 Haidian District (CN); Li, Yuanjing, 100084 Haidian District (CN); Zhao, Ziran, 100084 Haidian District (CN); Shen, Zongjun, 100084 Haidian District (CN); Liu, Yinong, 100084 Haidian District (CN); Sang, Bin, 100084 Haidian District (CN); Liu, Wenguo, 100084 Haidian District (CN)
(74) Representative: Dunlop, Hugh Christopher

(56) References cited:
- CN-A- 102 508 240
- CN-A- 102 508 306
- CN-A- 103 197 353
- US-A1- 2005 232 459
- US-A1- 2012 105 267
- US-A1- 2012 146 832

## Description

### CROSS-REFERENCE TO RELATED APPLICATION

This application claims the benefit of Chinese Patent Application No. 201310356864.2 filed on August 15, 2013 in the State Intellectual Property Office of China.

### BACKGROUND OF THE INVENTION

### 1. Field of the Invention

The present invention generally relates to a technical field of human body security inspection, in particular to a millimetre wave three dimensional holographic scan imaging apparatus and a method for inspecting a human body or an article using the same.

### 2. Description of the Related Art

The imaging safety inspection technology for a human body or an article used widely at present mainly comprises X ray imaging technology and millimetre wave imaging technology. The millimetre wave imaging technology becomes more popular in these years. It can in principle be classified into passive millimetre wave imaging technology and active millimetre wave imaging technology. The holographic imaging technology is the most important form of the active millimetre wave imaging technology.

In the active millimetre wave three dimensional holographic imaging technology for human body safety inspection, the cylindrical scan imaging technology has been used widely. However, the cylindrical scan imaging apparatus has a huge volume and a complex algorithm which is derived by approximation processes in theory, and thus its imaging accuracy is limited. Further, a cylindrical scan may only use a vertical antenna array which has a large length and too many antenna units, thus increasing the cost of apparatus.

Further, the active millimetre wave three dimensional holographic imaging apparatus in form of single side scan only inspects one side of the human body to be inspected at on one time and thus, the whole inspection for the human body needs to perform two scans. The human body to be inspected needs to turn around between two scans so that the safety inspection process becomes complicated and has a low inspection speed.

US2005/232459A1 proposed a surveillance system including a first sensor apparatus configured to interrogate a subject, with millimetre-wave electromagnetic radiation for imaging the subject. A supplemental source provides additional information about the subject that is relatable to objects potentially carried by the person. Relational information relates the produced image signal and the subject information. The supplemental source may be a second sensor apparatus adapted to detect a given characteristic of an object potentially carried by a person in the subject position.

CN103197353 describes a millimetre-wave mechanical scanning human imaging security inspection equipment that uses a pair of horizontal detection arrays which are situated on two opposing guide rails and which move vertically along the guide rails for scanning.

### SUMMARY OF THE INVENTION

An object of the present invention is to provide a millimetre wave three dimensional holographic scan imaging apparatus which can perform the millimetre wave three dimensional holographic scan imaging rapidly and efficiently and can simplify the structure thereof.

A further object of the present invention is to provide a method for inspecting a human body or an article using the millimetre wave three dimensional holographic scan imaging apparatus which can perform the inspection globally, conveniently and fast. It is in particular suitable to various applications of security inspection for a human body or an article.

To this end, the present invention may be implemented by the follows.

In accordance with one aspect of the present invention, it provides a millimetre wave three dimensional holographic scan imaging apparatus according to claim 1, comprising:
a first millimetre wave transceiver module comprising a first millimetre wave transceiver antenna array for transmitting and receiving a first millimetre wave signal;
a second millimetre wave transceiver module comprising a second millimetre wave transceiver antenna array for transmitting and receiving a second millimetre wave signal;
a first guide rail device, to which the first millimetre wave transceiver module is connected in slidable form, such that the first millimetre wave transceiver module is moveable along the first guide rail device to perform a first scan on an object to be inspected;
a second guide rail device, to which the second millimetre wave transceiver module is connected in slidable form, such that the second millimetre wave transceiver module is moveable along the second guide rail device to perform a second scan on the object to be inspected; and
a driver configured to drive the first millimetre wave transceiver module to move along the first guide rail device and/or to drive the second millimetre wave transceiver module to move along the second guide rail device,
wherein the first scan performed by the first millimetre wave transceiver module and the second scan performed by the second millimetre wave transceiver module both are plane scans, wherein the millimetre wave three dimensional holographic scan imaging apparatus further comprises a coupling means configured to allow the first millimetre wave transceiver module and the second millimetre wave transceiver module to move in association with each other, wherein the coupling means is configured such that the first millimetre wave transceiver module (101) and the second millimetre wave transceiver module (102) can move in the same speed or at a certain difference of speed, or such that a certain separation or phase difference between the first millimetre wave transceiver module (101) and the second millimetre wave transceiver module (102) is maintained on moving, and wherein the driver is configured to drive the movements of the first millimetre wave transceiver module and the second millimetre wave transceiver module by driving at least one of the coupling means, the first millimetre wave transceiver module and the second millimetre wave transceiver module.

In an embodiment, the first scan and the second scan may have a same direction or opposite directions.

In a further embodiment, the first scan may have a direction which is parallel, perpendicular or inclined to that of the second scan.

In a further embodiment, the first millimetre wave transceiver module and/or the second millimetre wave transceiver module may move in a vertical direction.

In a further embodiment, the first scan and the second scan may be performed synchronously or asynchronously.

In a further embodiment, the first scan and the second scan may have different scan speeds.

In a further embodiment, the driver may comprise a first driver configured to drive the first millimetre wave transceiver module directly, the first millimetre wave transceiver module being connected to the first guide rail device by the first driver, and/or the driver may comprise a second driver configured to drive the second millimetre wave transceiver module directly, the second millimetre wave transceiver module being connected to the second guide rail device by the second driver.

In a further embodiment, the first guide rail device and/or the second guide rail device may be composed of one guide rail or a plurality of guide rails parallel to each other.

In a further embodiment, the apparatus may further comprise:
a data processing device communicated by wire or wireless to the first millimetre wave transceiver module and/or the second millimetre wave transceiver module to receive scan data from the first millimetre wave transceiver module and/or the second millimetre wave transceiver module and to generate a millimetre wave holographic image; and
a display device communicated to the data processing device to receive and display the millimetre wave holographic image from the data processing device.

In a further embodiment, the data processing device may be configured to generate a control signal and transmit it to the driver to allow the driver to drive the first millimetre wave transceiver module and/or the second millimetre wave transceiver module to move; or the millimetre wave three dimensional holographic scan imaging apparatus further comprises a separate controller with respect to the data processing device, the separate controller configured to generate a control signal and transmit it to the driver to allow the driver to drive the first millimetre wave transceiver module and/or the second millimetre wave transceiver module to move.

In a further embodiment, the first millimetre wave signal and the second millimetre wave signal may have different frequencies in at least 50% of an entire period of scanning the object to be inspected by both the first millimetre wave transceiver module and the second millimetre wave transceiver module.

In a further embodiment, the time at which the first millimetre wave transceiver antenna array transmits millimetre waves, may be different from the time at which the second millimetre wave transceiver antenna array transmits millimetre waves, during an entire period of scanning the object to be inspected by both the first millimetre wave transceiver module and the second millimetre wave transceiver module.

In accordance with another aspect of the present invention, it provides a method for inspecting a human body or an article according to claim 10, using a millimetre wave three dimensional holographic scan imaging apparatus, comprising:
locating the human body or the article at an inspection position and setting a first millimetre wave transceiver module and a second millimetre wave transceiver module at their scan beginning positions respectively;
driving the first millimetre wave transceiver module and the second millimetre wave transceiver module by a driver to move from their scan beginning positions to their scan end positions along a first guide rail device and a second guide rail device continuously or discontinuously to achieve scanning to the human body or the article;
transmitting data sampled by the first millimetre wave transceiver module and the second millimetre wave transceiver module during the scanning to a data processing device, in the scanning and/or after the scanning; and
processing the data received from the first millimetre wave transceiver module and the second millimetre wave transceiver module using the data processing device to generate a millimetre wave holographic image of the human body or the article,
wherein the scan performed by the first millimetre wave transceiver module and the scan performed by the second millimetre wave transceiver module both are plane scans, wherein the millimetre wave three dimensional holographic scan imaging apparatus further comprises a coupling means configured to allow the first millimetre wave transceiver module and the second millimetre wave transceiver module to move in association with each other, wherein the coupling means is configured such that the first millimetre wave transceiver module and the second millimetre wave transceiver module can move in the same speed or at a certain difference of speed, or such that a certain separation or phase difference between the first millimetre wave transceiver module and the second millimetre wave transceiver module is maintained on moving, and wherein the driver is configured to drive the movements of the first millimetre wave transceiver module and the second millimetre wave transceiver module by driving at least one of the coupling means, the first millimetre wave transceiver module and the second millimetre wave transceiver module.

In a further embodiment, the scan performed by the first millimetre wave transceiver module and the scan performed by the second millimetre wave transceiver module may have different scan speeds.

In a further embodiment, the first millimetre wave signal and the second millimetre wave signal may have different frequencies in at least 50% of an entire period of scanning the human body or the article by both the first millimetre wave transceiver module and the second millimetre wave transceiver module.

In a further embodiment, the time at which the first millimetre wave transceiver antenna array transmits millimetre waves, may be different from the time at which the second millimetre wave transceiver antenna array transmits millimetre waves, during an entire period of scanning the human body or the article by both the first millimetre wave transceiver module and the second millimetre wave transceiver module.

In a further embodiment, after generating the millimetre wave holographic image of the human body or the article, an automatic identification on whether the human body or the article entrains suspected objects and on the position of the suspected objects is carried out and the identified results are outputted.

On basis of at least one of the above aspects, a dual plane scan on the object to be inspected can be achieved by at least two millimetre wave transceiver modules. It can increase scan speeds, improve scan accuracy, simplify scan operations and enhance flexibility of the apparatus.

### BRIEF DESCRIPTION OF THE DRAWINGS

These and other aspects as well as advantages of the present invention will become apparent and readily understood from the description of the preferred embodiments taking in conjunction with the accompanying drawings, in which:
Figure 1 shows schematically a construction of a millimetre wave three dimensional holographic scan imaging apparatus according to an embodiment of the present invention; and
Figure 2 is a flowchart of a method for inspecting a human body or an article in accordance with an embodiment of the present invention.

### DETAILED DESCRIPTION OF THE EMBODIMENTS

Technical solutions of the present invention will be described hereinafter in more detail by the way of embodiment with reference to figures of the attached drawings, wherein the same or like reference numerals refer to the same or like elements throughout the specification. The explanation to the embodiment of the present invention with referring to the accompanying drawings is intended to interpret the general inventive concept of the present invention, rather than being construed as a limiting to the present invention.

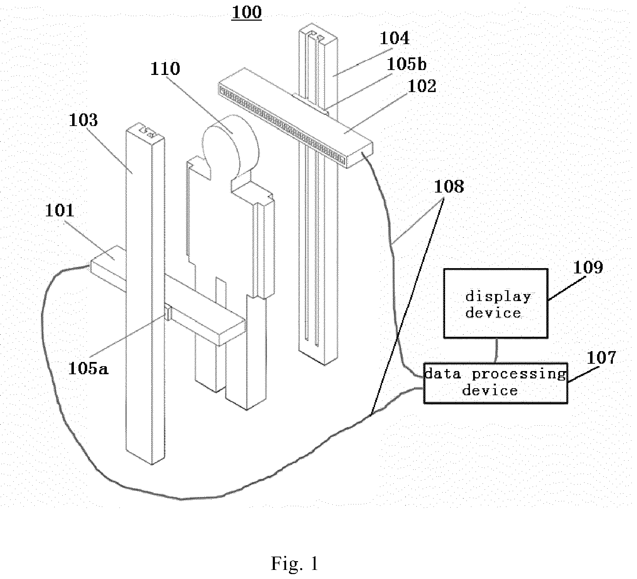

Fig. 1 shows schematically a millimetre wave three dimensional holographic scan imaging apparatus 100 according to an embodiment of the present invention. It includes a first millimetre wave transceiver module 101, a second millimetre wave transceiver module 102, a first guide rail device 103, a second guide rail device 104 and drivers 105a, 105b. The first millimetre wave transceiver module 101 comprises a first millimetre wave transceiver antenna array for transmitting and receiving a first millimetre wave signal. And the first millimetre wave transceiver module 101 is connected in slidable form to the first guide rail device 103, such that the first millimetre wave transceiver module 101 is moveable along the first guide rail device 103 to perform a first scan on an object 110 to be inspected. As such, the second millimetre wave transceiver module 102 comprises a second millimetre wave transceiver antenna array for transmitting and receiving a second millimetre wave signal and is connected in slidable form to the second guide rail device 104, such that the second millimetre wave transceiver module 102 is moveable along the second guide rail device 104 to perform a second scan on the object 110 to be inspected.

That is, the millimetre wave three dimensional holographic scan imaging apparatus 100 in accordance with the present invention may scan the object 110 to be inspected in two orientations at the same time, for example, scan a front side and a back side of the object 110 (such as a human body or an article) at the same time. It can improve the inspection efficiency significantly, for example, when the object 110 to be inspected is the human body, the apparatus can scan the front side and the back side of the human body at the same time without needing the human body to turn around. It will be very helpful to increase the inspection efficiency. The first scan performed by the first millimetre wave transceiver module 101 and the second scan performed by the second millimetre wave transceiver module 102 both are plane scans, instead of cylindrical scan. The millimetre wave holographic imaging algorithm required for the plane scans is simpler and more accurate in comparison with the algorithm for the cylindrical scans. And the plane scans may be performed in any scanning direction, for example, in the vertical, horizontal or inclined direction while the cylindrical scans are only performed along an arc-shaped track in the horizontal direction. Thus, the dual plane scan arrangements according to the present invention will have a flexibility that is significantly greater than that of the cylindrical scans in the prior art.

It should be noted that the arrangement of the first millimetre wave transceiver module 101 and the second millimetre wave transceiver module 102 facing to each other, as shown in Fig.1, is not necessary. For example, if a better imaging effect is desired to be achieved in a certain orientation (for example, the lateral frontal or rear orientation of the object 110 to be inspected, or the like), the first millimetre wave transceiver module 101 and the second millimetre wave transceiver module 102 may be arranged to not face to each other, but allowing the directions in which they transmit millimetre waves to be angled to each other.

The drivers 105a, 105b are configured to drive the first millimetre wave transceiver module 101 to move along the first guide rail device 103 and/or to drive the second millimetre wave transceiver module 102 to move along the second guide rail device 104. Fig. 1 shows a first driver 105a for driving the first millimetre wave transceiver module 101 directly and a second driver 105b for driving the second millimetre wave transceiver module 102 directly. In an example not forming part of the claimed invention, all of these drivers are not necessary, for example, the millimetre wave three dimensional holographic scan imaging apparatus 100 may include only one of these drivers 105a and 105b. The more than one of drivers provided according to the invention may be operated separately or in combination as long as they can drive the first millimetre wave transceiver module 101 and/or the second millimetre wave transceiver module 102 to perform actions of scanning. According to the invention, the first millimetre wave transceiver module 101 is connected to the first guide rail device 103 via the first driver 105a and/or the second millimetre wave transceiver module 102 is connected to the second guide rail device 104 via the second driver 105b.

In an example, the first scan performed by the first millimetre wave transceiver module 101 and the second scan performed by the second millimetre wave transceiver module 102 may have a same direction. In such case, it is for example, easy to sample images of a same local portion of the object 110 to be inspected at various orientations more rapidly. As another example, the first scan performed by the first millimetre wave transceiver module 101 and the second scan performed by the second millimetre wave transceiver module 102 may have opposite directions. It may prevent the two modules facing to each other in most of period of scanning and thus the disturbance between the first millimetre wave transceiver module 101 and the second millimetre wave transceiver module 102 can be reduced.

Although the direction in which first millimetre wave transceiver module 101 performs the first scan is parallel to the direction in which second millimetre wave transceiver module 102 performs the second scan, in the example shown in Fig. 1, as appreciated by the skilled person in the art, it is not necessary. For example, the direction in which first millimetre wave transceiver module 101 performs the first scan may be perpendicular to or inclined to the direction in which second millimetre wave transceiver module 102 performs the second scan. As the millimetre wave transceiver antenna arrays in the first millimetre wave transceiver module 101 and the second millimetre wave transceiver module 102 have limited lengths, it is typically in practice desired to determine the scanning direction depending on the object to be scanned, in particular when the object is elongated, so as to take all advantage of the lengths of the millimetre wave transceiver antenna arrays as possible as we can, for cost consideration. For example, the directions of the first scan and the second scan may be arranged to be variable such that the user can adjust the scanning direction as desired. Such effects cannot be achieved by the cylindrical scans.

In an example, the first millimetre wave transceiver module 101 and/or the second millimetre wave transceiver module 102 may move in a vertical direction. It is especially advantageous for scanning upright human bodies. As an example, the first scan and the second scan may be performed synchronously, in order to emerge the three dimensional holographic image synchronously. However, they also may be performed asynchronously in consideration that the requirements to scan the object 110 may depend on its different sides to be scanned. For example, a certain side or local portion of the object 110 may need to be scanned finely while the remaining parts of the object 110 may need only a coarse scanning. In such circumstance, the first scan and the second scan may be controlled respectively in an asynchronous mode. Likewise, in an example, the first scan and the second scan may have different scan speeds to meet different requirements of scanning. Even the scan speeds of the first scan and the second scan may be varied continuously or intermittently.

According to the invention, millimetre wave three dimensional holographic scan imaging apparatus 100 further comprises a coupling means configured to allow the first millimetre wave transceiver module 101 and the second millimetre wave transceiver module 102 to move in association with each other. For example, the coupling means may ensure that the first millimetre wave transceiver module 101 and the second millimetre wave transceiver module 102 move in the same speed or at a certain difference of speed, or it may keep a certain separation or phase difference between the first millimetre wave transceiver module 101 and the second millimetre wave transceiver module 102 on moving. As an example, the coupling means may be implemented as mechanical line or belt connecting the first millimetre wave transceiver module 101 and the second millimetre wave transceiver module 102. It also may constrain the first millimetre wave transceiver module 101 and the second millimetre wave transceiver module 102 by pneumatic, hydraulic, magnetic or electrostatic elements. It may be implemented even by constraints in the control signal of driving the first millimetre wave transceiver module 101 and the second millimetre wave transceiver module 102. The coupling means may not only constrain the movement of the first millimetre wave transceiver module 101 and the second millimetre wave transceiver module 102, but also improve their stability and reliability of the movements, even may provide a safe protection for them upon an accident occurs.

The driver drives the movements of the first millimetre wave transceiver module 101 and the second millimetre wave transceiver module 102 by driving one or more of the coupling means, the first millimetre wave transceiver module 101 and the second millimetre wave transceiver module 102.

In an example, the first guide rail device 103 and the second guide rail device 104 may be substantially parallel to each other. However, it is not necessary, for example, for the sake of convenient arrangement, they may be angled to each other. In an example, the first guide rail device 103 and/or the second guide rail device 104 may be composed of one guide rail or a plurality of guide rails parallel to each other. The latter allows the first millimetre wave transceiver module 101 and/or the second millimetre wave transceiver module 102 to move more stably.

In an example, the millimetre wave three dimensional holographic scan imaging apparatus 100 may further comprise a data processing device 107. The data processing device 107 is communicated by wire (for example by wires 108) or wireless to the first millimetre wave transceiver module 101 and/or the second millimetre wave transceiver module 102 to receive scan data from the first millimetre wave transceiver module 101 and/or the second millimetre wave transceiver module 102 and to generate a millimetre wave holographic image. The millimetre wave three dimensional holographic scan imaging apparatus 100 may further comprise a display device 109. The display device 109 is communicated to the data processing device 107 to receive and display the millimetre wave holographic image from the data processing device 107.

In an example, the data processing device 107 may be configured to generate a control signal and transmit it to the driver 105a, 105b to allow the driver 105a, 105b to drive the first millimetre wave transceiver module 101 and/or the second millimetre wave transceiver module 102 to move. As another example, the millimetre wave three dimensional holographic scan imaging apparatus 100 may also include a separate controller with respect to the data processing device 107, the separate controller configured to generate a control signal and transmit it to the drivers 105a, 105b to allow the drivers 105a, 105b to drive the first millimetre wave transceiver module 101 and/or the second millimetre wave transceiver module 102 to perform scanning motion.

In order to reduce the signal disturbance between the first millimetre wave transceiver module 101 and the second millimetre wave transceiver module 102, as an example, the first millimetre wave signal transmitted and received by the first millimetre wave transceiver module 101 and the second millimetre wave signal transmitted and received by the second millimetre wave transceiver module 102 may have different frequencies in at least 50% of an entire period of scanning the object 110 to be inspected by both the first millimetre wave transceiver module 101 and the second millimetre wave transceiver module 102, for example, in all of the entire period or in the part of the entire period in which the first millimetre wave transceiver module 101 is relatively close to the second millimetre wave transceiver module 102.

The time at which the first millimetre wave transceiver antenna array in the first millimetre wave transceiver module 101 transmits millimetre waves, is different from the time at which the second millimetre wave transceiver antenna array in the second millimetre wave transceiver module 102 transmits millimetre waves, during the entire period of scanning the object 110 to be inspected by both the first millimetre wave transceiver module 101 and the second millimetre wave transceiver module 102, that is, the two modules transmit the respective millimetre waves at different times. It may also reduce or avoid the signal disturbance between the first millimetre wave transceiver module 101 and the second millimetre wave transceiver module 102.

As illustrated in Fig. 1, the object 110 to be inspected (the human body shown in Fig.1) is located between the first millimetre wave transceiver module 101 and the second millimetre wave transceiver module 102. The first millimetre wave transceiver module 101 and the second millimetre wave transceiver module 102 may respectively perform scans on the front side and the back side of the object 110 to be inspected to obtain data and provide them to the data processing device 107 to generate millimetre wave images. However, it is not necessary, for example, the first millimetre wave transceiver module 101 and the second millimetre wave transceiver module 102 may perform scans on any sides of the object 110 to be inspected.

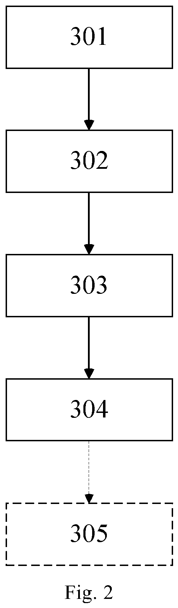

The present invention further provides a method for inspecting a human body or an article using a millimetre wave three dimensional holographic scan imaging apparatus as described above, as shown in Fig. 2. The method includes:
a step 301 of locating the human body or the article at an inspection position and setting a first millimetre wave transceiver module 101 and a second millimetre wave transceiver module 102 at their scan beginning positions respectively;
a step 302 of driving the first millimetre wave transceiver module 101 and the second millimetre wave transceiver module 102 by drivers 105a, 105b to respectively move from their scan beginning positions to their scan end positions along the first guide rail device 103 and the second guide rail device 104 continuously or discontinuously to finish the scans to the human body or the article;
a step 303 of transmitting data sampled by the first millimetre wave transceiver module 101 and the second millimetre wave transceiver module 102 during scanning to a data processing device 107, in scanning and/or after the scanning; and
a step 304 of processing the data received from the first millimetre wave transceiver module 101 and the second millimetre wave transceiver module 102 using the data processing device 107 to generate a millimetre wave holographic image of the human body or the article.

In the above step 302, the scan performed by the first millimetre wave transceiver module 101 and the scan performed by the second millimetre wave transceiver module 102 both are plane scans.

As described above, during scanning of the first millimetre wave transceiver module 101 and the second millimetre wave transceiver module 102, the scan performed by the first millimetre wave transceiver module 101 and the scan performed by the second millimetre wave transceiver module 102 may have a same scan speed or different scan speeds.

In order to reduce the signal disturbance between the first millimetre wave transceiver module 101 and the second millimetre wave transceiver module 102, the frequency division (the first millimetre wave transceiver module 101 and the second millimetre wave transceiver module 102 transmit and receive millimetre waves by different frequencies) or the time division (the first millimetre wave transceiver module 101 and the second millimetre wave transceiver module 102 transmit millimetre waves at different times) as described above may be used in the step 302.

In an example, the above method may optionally further include a step 305: after generating the millimetre wave holographic image of the human body or the article, carrying out an automatic identification on whether the human body or the article entrains suspected objects and on the position of the suspected objects and outputting the identified results. With the step 305, the suspected objects may be identified rapidly to avoid risks in security. It is in particular beneficial in applications which need to determine risks in security rapidly, for example, airports, and customs, and so on.

Although the present invention has been explained with reference to the drawings, the embodiments shown in the drawings are only illustrative, instead of limiting the present invention.

Although some embodiments of the general inventive concept are illustrated and explained, it would be appreciated by those skilled in the art that modifications and variations may be made in these embodiments without departing from the principles of the invention, the scope of which is defined in the appended claims.

## Claims

1. A millimetre wave three dimensional holographic scan imaging apparatus (100), comprising:
a first millimetre wave transceiver module (101) comprising a first millimetre wave transceiver antenna array for transmitting and receiving a first millimetre wave signal;
a second millimetre wave transceiver module (102) comprising a second millimetre wave transceiver antenna array for transmitting and receiving a second millimetre wave signal;
a first guide rail device (103), to which the first millimetre wave transceiver module (101) is connected in slidable form, such that the first millimetre wave transceiver module (101) is moveable along the first guide rail device (103) to perform a first scan on an object to be inspected;
a second guide rail device (104), to which the second millimetre wave transceiver module (102) is connected in slidable form, such that the second millimetre wave transceiver module (102) is moveable along the second guide rail device (104) to perform a second scan on the object to be inspected; and
a driver configured to drive the first millimetre wave transceiver module (101) to move along the first guide rail device (103) and/or to drive the second millimetre wave transceiver module (102) to move along the second guide rail device (104),
wherein the first scan performed by the first millimetre wave transceiver module (101) and the second scan performed by the second millimetre wave transceiver module (102) both are plane scans,
wherein the millimetre wave three dimensional holographic scan imaging apparatus (100) further comprises: a coupling means configured to allow the first millimetre wave transceiver module (101) and the second millimetre wave transceiver module (102) to move in association with each other,
**characterized in that**
the driver is configured to drive the movements of the first millimetre wave transceiver module (101) and the second millimetre wave transceiver module (102) by driving at least one of the coupling means, the first millimetre wave transceiver module (101) and the second millimetre wave transceiver module (102),
wherein the driver comprises a first driver (105a) configured to drive the first millimetre wave transceiver module (101) directly, the first millimetre wave transceiver module (101) being connected to the first guide rail device (103) by the first driver (105a), and the driver comprises a second driver (105b) configured to drive the second millimetre wave transceiver module (102) directly, the second millimetre wave transceiver module (102) being connected to the second guide rail device (104) by the second driver (105b), and
wherein the time at which the first millimetre wave transceiver antenna array transmits millimetre waves, is different from the time at which the second millimetre wave transceiver antenna array transmits millimetre waves, during an entire period of scanning the object to be inspected by both the first millimetre wave transceiver module (101) and the second millimetre wave transceiver module (102).

2. The millimetre wave three dimensional holographic scan imaging apparatus (100) of claim 1, **characterized in that** the first scan and the second scan have a same direction or opposite directions.

3. The millimetre wave three dimensional holographic scan imaging apparatus (100) of claim 1, **characterized in that** the first scan have a direction which is parallel, perpendicular or inclined to that of the second scan.

4. The millimetre wave three dimensional holographic scan imaging apparatus (100) of claim 1, **characterized in that** the first millimetre wave transceiver module (101) and/or the second millimetre wave transceiver module (102) move in a vertical direction.

5. The millimetre wave three dimensional holographic scan imaging apparatus (100) of claim 1, **characterized in that** the first scan and the second scan are performed synchronously or asynchronously.

6. The millimetre wave three dimensional holographic scan imaging apparatus (100) of claim 1, **characterized in that** the first scan and the second scan may have different scan speeds.

7. The millimetre wave three dimensional holographic scan imaging apparatus (100) of any one of claims 1-6, **characterized in that** the first guide rail device (103) and/or the second guide rail device (104) is/are composed of one guide rail or a plurality of guide rails parallel to each other.

8. The millimetre wave three dimensional holographic scan imaging apparatus (100) of any one of claims 1-6, **characterized in that** the apparatus further comprises:
a data processing device (107) communicated by wire or wireless to the first millimetre wave transceiver module (101) and/or the second millimetre wave transceiver module (102) to receive scan data from the first millimetre wave transceiver module (101) and/or the second millimetre wave transceiver module (102) and to generate a millimetre wave holographic image; and
a display device (109) communicated to the data processing device (107) to receive and display the millimetre wave holographic image from the data processing device (107).

9. The millimetre wave three dimensional holographic scan imaging apparatus (100) of claim 8, **characterized in that** the data processing device (107) is configured to generate a control signal and transmit it to the driver to allow the driver to drive the first millimetre wave transceiver module (101) and/or the second millimetre wave transceiver module (102) to move; or the millimetre wave three dimensional holographic scan imaging apparatus (100) further comprises a separate controller with respect to the data processing device (107), the separate controller configured to generate a control signal and transmit it to the driver to allow the driver to drive the first millimetre wave transceiver module (101) and/or the second millimetre wave transceiver module (102) to move.

10. A method for inspecting a human body or an article using a millimetre wave three dimensional holographic scan imaging apparatus (100), comprising:
locating the human body or the article at an inspection position and setting a first millimetre wave transceiver module (101) and a second millimetre wave transceiver module (102) at their scan beginning positions respectively;
driving the first millimetre wave transceiver module (101) and the second millimetre wave transceiver module (102) by a driver to move from their scan beginning positions to their scan end positions along a first guide rail device (103) and a second guide rail device (104) continuously or discontinuously to achieve scanning to the human body or the article, respectively;
transmitting data sampled by the first millimetre wave transceiver module (101) and the second millimetre wave transceiver module (102) during the scanning to a data processing device (107), in the scanning and/or after the scanning; and
processing the data received from the first millimetre wave transceiver module (101) and the second millimetre wave transceiver module (102) using the data processing device to generate a millimetre wave holographic image of the human body or the article,
wherein the scan performed by the first millimetre wave transceiver module (101) and the scan performed by the second millimetre wave transceiver module (102) both are plane scans,
wherein the millimetre wave three dimensional holographic scan imaging apparatus (100) further comprises a coupling means configured to allow the first millimetre wave transceiver module (101) and the second millimetre wave transceiver module (102) to move in association with each other,
**characterized in that**
the driver is configured to drive the movements of the first millimetre wave transceiver module (101) and the second millimetre wave transceiver module (102) by driving at least one of the coupling means, the first millimetre wave transceiver module (101) and the second millimetre wave transceiver module (102),
wherein the driver comprises a first driver (105a) configured to drive the first millimetre wave transceiver module (101) directly, the first millimetre wave transceiver module (101) being connected to the first guide rail device (103) by the first driver (105a), and the driver comprises a second driver (105b) configured to drive the second millimetre wave transceiver module (102) directly, the second millimetre wave transceiver module (102) being connected to the second guide rail device (104) by the second driver (105b), and
wherein the time at which the first millimetre wave transceiver antenna array transmits millimetre waves, is different from the time at which the second millimetre wave transceiver antenna array transmits millimetre waves, during an entire period of scanning the object to be inspected by both the first millimetre wave transceiver module (101) and the second millimetre wave transceiver module (102).

11. The method of claim 10, **characterized in that** after generating the millimetre wave holographic image of the human body or the article, an automatic identification on whether the human body or the article entrains suspected objects and on the position of the suspected objects is carried out and the identified results are outputted.

## Patentansprüche

1. Vorrichtung (100) zur dreidimensionalen holografischen Scanabbildung mit Millimeterwellen, umfassend:
ein erstes Millimeterwellen-Transceivermodul (101) umfassend ein erstes Millimeterwellen-Transceiverantennenarray zum Übertragen und Empfangen eines ersten Millimeterwellensignals;
ein zweites Millimeterwellen-Transceivermodul (102) umfassend ein zweites Millimeterwellen-Transceiverantennenarray zum Übertragen und Empfangen eines zweiten Millimeterwellensignals;
eine erste Leitschienenvorrichtung (103), mit der das erste Millimeterwellen-Transceivermodul (101) in verschiebbarer Form verbunden ist derart, dass das erste Millimeterwellen-Transceivermodul (101) entlang der ersten Leitschienenvorrichtung (103) bewegbar ist, um einen ersten Scan eines zu inspizierenden Objekts durchzuführen;
eine zweite Leitschienenvorrichtung (104), mit der das zweite Millimeterwellen-Transceivermodul (102) in verschiebbarer Form verbunden ist derart, dass das zweite Millimeterwellen-Transceivermodul (102) entlang der zweiten Leitschienenvorrichtung (104) bewegbar ist, um einen zweiten Scan des zu inspizierenden Objekts durchzuführen; und
einen Antrieb, der zum Antreiben des ersten Millimeterwellen-Transceivermoduls (101) zum Bewegen entlang der ersten Leitschienenvorrichtung (103) und/oder zum Antreiben des zweiten Millimeterwellen-Transceivermoduls (102) zum Bewegen entlang der zweiten Leitschienenvorrichtung (104) konfiguriert ist,
wobei der durch das erste Millimeterwellen-Transceivermodul (101) durchgeführte erste Scan und der durch das zweite Millimeterwellen-Transceivermodul (102) durchgeführte zweite Scan beide ebene Scans sind,
wobei die Vorrichtung (100) zur dreidimensionalen holografischen Scanabbildung mit Millimeterwellen ferner Folgendes umfasst: ein Kopplungsmittel, das konfiguriert ist, dem ersten Millimeterwellen-Transceivermodul (101) und dem zweiten Millimeterwellen-Transceivermodul (102) zu ermöglichen, sich miteinander koordiniert zu bewegen,
**dadurch gekennzeichnet, dass** der Antrieb dazu konfiguriert ist, die Bewegungen des ersten Millimeterwellen-Transceivermoduls (101) und des zweiten Millimeterwellen-Transceivermoduls (102) durch Antreiben mindestens eines des Kopplungsmittels, des ersten Millimeterwellen-Transceivermoduls (101) und des zweiten Millimeterwellen-Transceivermoduls (102) anzutreiben,
wobei der Antrieb einen ersten Antrieb (105a) umfasst, der zum direkten Antreiben des ersten Millimeterwellen-Transceivermoduls (101) konfiguriert ist, wobei das erste Millimeterwellen-Transceivermodul (101) über den ersten Antrieb (105a) mit der ersten Leitschienenvorrichtung (103) verbunden ist, und der Antrieb einen zweiten Antrieb (105b) umfasst, der zum direkten Antreiben des zweiten Millimeterwellen-Transceivermoduls (102) konfiguriert ist, wobei das zweite Millimeterwellen-Transceivermodul (102) über den zweiten Antrieb (105b) mit der zweiten Leitschienenvorrichtung (104) verbunden ist, und
wobei die Zeit, zu der das erste Millimeterwellen-Transceiverantennenarray Millimeterwellen überträgt, von der Zeit, zu der das zweite Millimeterwellen-Transceiverantennenarray Millimeterwellen überträgt, während einer vollständigen Periode des Scannens des Objekts verschieden ist, das von sowohl dem ersten Millimeterwellen-Transceivermodul (101) als auch von dem zweiten Millimeterwellen-Transceivermodul (102) zu inspizieren ist.

2. Vorrichtung (100) zur dreidimensionalen holografischen Scanabbildung mit Millimeterwellen nach Anspruch 1, **dadurch gekennzeichnet, dass** der erste Scan und der zweite Scan eine gleiche oder entgegengesetzte Richtung haben.

3. Vorrichtung (100) zur dreidimensionalen holografischen Scanabbildung mit Millimeterwellen nach Anspruch 1, **dadurch gekennzeichnet, dass** der erste Scan eine Richtung hat, die parallel, senkrecht oder geneigt in Bezug auf die Richtung des zweiten Scans steht.

4. Vorrichtung (100) zur dreidimensionalen holografischen Scanabbildung mit Millimeterwellen nach Anspruch 1, **dadurch gekennzeichnet, dass** das erste Millimeterwellen-Transceivermodul (101) und/oder das zweite Millimeterwellen-Transceivermodul (102) sich in einer vertikalen Richtung bewegen.

5. Vorrichtung (100) zur dreidimensionalen holografischen Scanabbildung mit Millimeterwellen nach Anspruch 1, **dadurch gekennzeichnet, dass** der erste Scan und der zweite Scan synchron oder asynchron durchgeführt werden.

6. Vorrichtung (100) zur dreidimensionalen holografischen Scanabbildung mit Millimeterwellen nach Anspruch 1, **dadurch gekennzeichnet, dass** der erste Scan und der zweite Scan unterschiedliche Scangeschwindigkeiten haben können.

7. Vorrichtung (100) zur dreidimensionalen holografischen Scanabbildung mit Millimeterwellen nach einem der Ansprüche 1 bis 6, **dadurch gekennzeichnet, dass** die erste Leitschienenvorrichtung (103) und/oder die zweite Leitschienenvorrichtung (104) aus einer Leitschiene oder einer Mehrzahl von zueinander parallelen Leitschienen zusammengesetzt ist/sind.

8. Vorrichtung (100) zur dreidimensionalen holografischen Scanabbildung mit Millimeterwellen nach einem der Ansprüche 1 bis 6, **dadurch gekennzeichnet, dass** die Vorrichtung ferner Folgendes umfasst:
ein Datenverarbeitungsgerät (107), das über Kabel oder drahtlos mit dem ersten Millimeterwellen-Transceivermodul (101) und/oder dem zweiten Millimeterwellen-Transceivermodul (102) kommuniziert, um Scandaten vom ersten Millimeterwellen-Transceivermodul (101) und/oder dem zweiten Millimeterwellen-Transceivermodul (102) zu empfangen und ein Millimeterwellen-Holografiebild zu erzeugen; und
ein Displaygerät (109), das mit dem Datenverarbeitungsgerät (107) kommuniziert, um das Millimeterwellen-Holografiebild vom Datenverarbeitungsgerät (107) zu empfangen und anzuzeigen.

9. Vorrichtung (100) zur dreidimensionalen holografischen Scanabbildung mit Millimeterwellen nach Anspruch 8, **dadurch gekennzeichnet, dass** das Datenverarbeitungsgerät (107) konfiguriert ist, ein Steuersignal zu erzeugen und dies zum Antrieb zu übertragen, um dem Antrieb zu ermöglichen, das erste Millimeterwellen-Transceivermodul (101) und/oder das zweite Millimeterwellen-Transceivermodul (102) zum Bewegen anzutreiben; oder dass die Vorrichtung (100) zur dreidimensionalen holografischen Scanabbildung mit Millimeterwellen ferner eine separate Steuerung bezüglich des Datenverarbeitungsgerätes (107) umfasst, wobei die separate Steuerung konfiguriert ist, ein Steuersignal zu erzeugen und dies zum Antrieb zu übertragen, um dem Antrieb zu ermöglichen, das erste Millimeterwellen-Transceivermodul (101) und/oder das zweite Millimeterwellen-Transceivermodul (102) zum Bewegen anzutreiben.

10. Verfahren zum Inspizieren eines menschlichen Körpers oder eines Artikels unter Verwendung einer Vorrichtung (100) zur dreidimensionalen holografischen Scanabbildung mit Millimeterwellen, umfassend:
Platzieren des menschlichen Körpers oder des Artikels an einer Inspektionsposition und Einstellen eines ersten Millimeterwellen-Transceivermoduls (101) und eines zweiten Millimeterwellen-Transceivermoduls (102) an ihren jeweiligen Scan-Anfangspositionen;
Antreiben des ersten Millimeterwellen-Transceivermoduls (101) und des zweiten Millimeterwellen-Transceivermoduls (102) durch einen Antrieb, um sich von ihren Scan-Anfangspositionen zu ihren Scan-Endpositionen kontinuierlich oder nicht kontinuierlich entlang einer ersten Leitschienenvorrichtung (103) und einer zweiten Leitschienenvorrichtung (104) zu bewegen, um das Scannen des menschlichen Körpers oder des Artikels zu bewerkstelligen;
Übertragen von Daten, die das erste Millimeterwellen-Transceivermodul (101) und das zweite Millimeterwellen-Transceivermodul (102) während des Scannens aufgenommen haben, an ein Datenverarbeitungsgerät (107) während des Scannens und/oder nach dem Scannen; und
Verarbeiten der vom ersten Millimeterwellen-Transceivermodul (101) und vom zweiten Millimeterwellen-Transceivermodul (102) empfangenen Daten unter Verwendung des Datenverarbeitungsgeräts, um ein Millimeterwellen-Holografiebild des menschlichen Körpers oder des Artikels zu erzeugen,
wobei der durch das erste Millimeterwellen-Transceivermodul (101) durchgeführte Scan und der durch das zweite Millimeterwellen-Transceivermodul (102) durchgeführte Scan beide ebene Scans sind,
wobei die Vorrichtung (100) zur dreidimensionalen holografischen Scanabbildung mit Millimeterwellen ferner ein Kopplungsmittel umfasst, das konfiguriert ist, dem ersten Millimeterwellen-Transceivermodul (101) und dem zweiten Millimeterwellen-Transceivermodul (102) zu ermöglichen, sich miteinander koordiniert zu bewegen,
**dadurch gekennzeichnet, dass** der Antrieb dazu konfiguriert ist, die Bewegungen des ersten Millimeterwellen-Transceivermoduls (101) und des zweiten Millimeterwellen-Transceivermoduls (102) durch Antreiben mindestens eines des Kopplungsmittels, des ersten Millimeterwellen-Transceivermoduls (101) und des zweiten Millimeterwellen-Transceivermoduls (102) anzutreiben,
wobei der Antrieb einen ersten Antrieb (105a) umfasst, der zum direkten Antreiben des ersten Millimeterwellen-Transceivermoduls (101) konfiguriert ist, wobei das erste Millimeterwellen-Transceivermodul (101) über den ersten Antrieb (105a) mit der ersten Leitschienenvorrichtung (103) verbunden ist, und der Antrieb einen zweiten Antrieb (105b) umfasst, der zum direkten Antreiben des zweiten Millimeterwellen-Transceivermoduls (102) konfiguriert ist, wobei das zweite Millimeterwellen-Transceivermodul (102) über den zweiten Antrieb (105b) mit der zweiten Leitschienenvorrichtung (104) verbunden ist, und
wobei die Zeit, zu der das erste Millimeterwellen-Transceiverantennenarray Millimeterwellen überträgt, von der Zeit, zu der das zweite Millimeterwellen-Transceiverantennenarray Millimeterwellen überträgt, während einer vollständigen Periode des Scannens des Objekts verschieden ist, das von sowohl dem ersten Millimeterwellen-Transceivermodul (101) als auch von dem zweiten Millimeterwellen-Transceivermodul (102) zu inspizieren ist.

11. Verfahren nach Anspruch 10, **dadurch gekennzeichnet, dass** nach der Erzeugung des Millimeterwellen-Holografiebildes des menschlichen Körpers oder des Artikels eine automatische Identifikation ausgeführt wird, ob der menschliche Körper oder der Artikel verdächtige Objekte entlang bringt und wo die Position der verdächtigen Objekte ist, und die identifizierten Ergebnisse ausgegeben werden.

## Revendications

1. Un appareil d'imagerie à balayage holographique tridimensionnel à ondes millimétriques (100), comprenant :
un premier module émetteur-récepteur à ondes millimétriques (101) comprenant un première matrice d'antennes d'émetteur-récepteur à ondes millimétriques destinée à la transmission et à la réception d'un premier signal à ondes millimétriques,
un deuxième module émetteur-récepteur à ondes millimétriques (102) comprenant une deuxième matrice d'antennes d'émetteur-récepteur à ondes millimétriques destinée à la transmission et à la réception d'un deuxième signal à ondes millimétriques,
un premier dispositif à rail de guidage (103), auquel le premier module émetteur-récepteur à ondes millimétriques (101) est raccordé de manière coulissable, de sorte que le premier module émetteur-récepteur à ondes millimétriques (101) soit déplaçable le long du premier dispositif à rail de guidage (103) de façon à exécuter un premier balayage sur un objet à inspecter,
un deuxième dispositif à rail de guidage (104), auquel le deuxième module émetteur-récepteur à ondes millimétriques (102) est raccordé de manière coulissable, de sorte que le deuxième module émetteur-récepteur à ondes millimétriques (102) soit déplaçable le long du deuxième dispositif à rail de guidage (104) de façon à exécuter un deuxième balayage sur l'objet à inspecter, et
un dispositif d'entraînement configuré de façon à amener le premier module émetteur-récepteur à ondes millimétriques (101) à se déplacer le long du premier dispositif à rail de guidage (103) et/ou à amener le deuxième module émetteur-récepteur à ondes millimétriques (102) à se déplacer le long du deuxième dispositif à rail de guidage (104),
où le premier balayage exécuté par le premier module émetteur-récepteur à ondes millimétriques (101) et le deuxième balayage exécuté par le deuxième module émetteur-récepteur à ondes millimétriques (102) sont tous les deux des balayages de plan,
où l'appareil d'imagerie à balayage holographique tridimensionnel à ondes millimétriques (100) comprend en outre : un moyen de couplage configuré de façon à permettre au premier module émetteur-récepteur à ondes millimétriques (101) et au deuxième module émetteur-récepteur à ondes millimétriques (102) de se déplacer en association l'un avec l'autre,
**caractérisé en ce que** le dispositif d'entraînement est configuré de façon à entraîner les déplacements du premier module émetteur-récepteur à ondes millimétriques (101) et du deuxième module émetteur-récepteur à ondes millimétriques (102) par l'entraînement d'au moins un élément parmi le moyen de couplage, le premier module émetteur-récepteur à ondes millimétriques (101) et le deuxième module émetteur-récepteur à ondes millimétriques (102),
où le dispositif d'entraînement comprend un premier dispositif d'entraînement (105a) configuré de façon à entraîner le premier module émetteur-récepteur à ondes millimétriques (101) directement, le premier module émetteur-récepteur à ondes millimétriques (101) étant raccordé au premier dispositif à rail de guidage (103) par le premier dispositif d'entraînement (105a), et le dispositif d'entraînement comprend un deuxième dispositif d'entraînement (105b) configuré de façon à entraîner le deuxième module émetteur-récepteur à ondes millimétriques (102) directement, le deuxième module émetteur-récepteur à ondes millimétriques (102) étant raccordé au deuxième dispositif à rail de guidage (104) par le deuxième dispositif d'entraînement (105b), et
où l'instant où la première matrice d'antennes d'émetteur-récepteur à ondes millimétriques transmet des ondes millimétriques est différent de l'instant où la deuxième matrice d'antennes d'émetteur-récepteur à ondes millimétriques transmet des ondes millimétriques, au cours d'une période complète de balayage de l'objet à inspecter par à la fois le premier module émetteur-récepteur à ondes millimétriques (101) et le deuxième module émetteur-récepteur à ondes millimétriques (102).

2. L'appareil d'imagerie à balayage holographique tridimensionnel à ondes millimétriques (100) selon la Revendication 1, **caractérisé en ce que** le premier balayage et le deuxième balayage ont une même direction ou des directions opposées.

3. L'appareil d'imagerie à balayage holographique tridimensionnel à ondes millimétriques (100) selon la Revendication 1, **caractérisé en ce que** le premier balayage a une direction qui est parallèle à, perpendiculaire à ou inclinée par rapport à celle du deuxième balayage.

4. L'appareil d'imagerie à balayage holographique tridimensionnel à ondes millimétriques (100) selon la Revendication 1, **caractérisé en ce que** le premier module émetteur-récepteur à ondes millimétriques (101) et/ou le deuxième module émetteur-récepteur à ondes millimétriques (102) se déplacent dans une direction verticale.

5. L'appareil d'imagerie à balayage holographique tridimensionnel à ondes millimétriques (100) selon la Revendication 1, **caractérisé en ce que** le premier balayage et le deuxième balayage sont exécutés de manière synchrone ou asynchrone.

6. L'appareil d'imagerie à balayage holographique tridimensionnel à ondes millimétriques (100) selon la Revendication 1, **caractérisé en ce que** le premier balayage et le deuxième balayage peuvent présenter des vitesses de balayage différentes.

7. L'appareil d'imagerie à balayage holographique tridimensionnel à ondes millimétriques (100) selon l'une quelconque des Revendications 1 à 6, **caractérisé en ce que** le premier dispositif à rail de guidage (103) et/ou le deuxième dispositif à rail de guidage (104) est/sont composé(s) d'un rail de guidage ou d'une pluralité de rails de guidage parallèles les uns aux autres.

8. L'appareil d'imagerie à balayage holographique tridimensionnel à ondes millimétriques (100) selon l'une quelconque des Revendications 1 à 6, **caractérisé en ce que** l'appareil comprend en outre :
un dispositif de traitement de données (107) communiquant par fil ou de manière non filaire avec le premier module émetteur-récepteur à ondes millimétriques (101) et/ou le deuxième module émetteur-récepteur à ondes millimétriques (102) de façon à recevoir des données de balayage à partir du premier module émetteur-récepteur à ondes millimétriques (101) et/ou du deuxième module émetteur-récepteur à ondes millimétriques (102) et à générer une image holographique à ondes millimétriques, et
un dispositif d'affichage (109) communiquant avec le dispositif de traitement de données (107) de façon à recevoir et afficher l'image holographique à ondes millimétriques à partir du dispositif de traitement de données (107).

9. L'appareil d'imagerie à balayage holographique tridimensionnel à ondes millimétriques (100) selon la Revendication 8, **caractérisé en ce que** le dispositif de traitement de données (107) est configuré de façon à générer un signal de commande et à le transmettre au dispositif d'entraînement de façon à permettre au dispositif d'entraînement d'amener le premier module émetteur-récepteur à ondes millimétriques (101) et/ou le deuxième module émetteur-récepteur à ondes millimétriques (102) à se déplacer, ou l'appareil d'imagerie à balayage holographique tridimensionnel à ondes millimétriques (100) comprend en outre un dispositif de commande distinct par rapport au dispositif de traitement de données (107), le dispositif de commande distinct étant configuré de façon à générer un signal de commande et à le transmettre au dispositif d'entraînement de façon à permettre au dispositif d'entraînement d'amener le premier module émetteur-récepteur à ondes millimétriques (101) et/ou le deuxième module émetteur-récepteur à ondes millimétriques (102) à se déplacer.

10. Un procédé d'inspection d'un corps humain ou d'un article au moyen d'un appareil d'imagerie à balayage holographique tridimensionnel à ondes millimétriques (100), comprenant :
la localisation du corps humain ou de l'article à une position d'inspection et le réglage d'un premier module émetteur-récepteur à ondes millimétriques (101) et d'un deuxième module émetteur-récepteur à ondes millimétriques (102) à leurs positions de début de balayage respectivement,
l'entraînement du premier module émetteur-récepteur à ondes millimétriques (101) et du deuxième module émetteur-récepteur à ondes millimétriques (102) par un dispositif d'entraînement de façon à les déplacer de leurs positions de début de balayage vers leurs positions de fin de balayage le long d'un premier dispositif à rail de guidage (103) et d'un deuxième dispositif à rail de guidage (104) de manière continue ou discontinue de façon à réaliser le balayage du corps humain ou de l'article, respectivement,
la transmission de données échantillonnées par le premier module émetteur-récepteur à ondes millimétriques (101) et le deuxième module émetteur-récepteur à ondes millimétriques (102) au cours du balayage vers un dispositif de traitement de données (107), dans le balayage et/ou après le balayage, et
le traitement des données reçues du premier module émetteur-récepteur à ondes millimétriques (101) et du deuxième module émetteur-récepteur à ondes millimétriques (102) au moyen du dispositif de traitement de données de façon à générer une image holographique à ondes millimétriques du corps humain ou de l'article,
où le balayage exécuté par le premier module émetteur-récepteur à ondes millimétriques (101) et le balayage exécuté par le deuxième module émetteur-récepteur à ondes millimétriques (102) sont tous les deux des balayages de plan,
où l'appareil d'imagerie à balayage holographique tridimensionnel à ondes millimétriques (100) comprend en outre un moyen de couplage configuré de façon à permettre au premier module émetteur-récepteur à ondes millimétriques (101) et au deuxième module émetteur-récepteur à ondes millimétriques (102) de se déplacer en association l'un avec l'autre,
**caractérisé en ce que** le dispositif d'entraînement est configuré de façon à entraîner les déplacements du premier module émetteur-récepteur à ondes millimétriques (101) et du deuxième module émetteur-récepteur à ondes millimétriques (102) par l'entraînement d'au moins un élément parmi le moyen de couplage, le premier module émetteur-récepteur à ondes millimétriques (101) et le deuxième module émetteur-récepteur à ondes millimétriques (102),
où le dispositif d'entraînement comprend un premier dispositif d'entraînement (105a) configuré de façon à entraîner le premier module émetteur-récepteur à ondes millimétriques (101) directement, le premier module émetteur-récepteur à ondes millimétriques (101) étant raccordé au premier dispositif à rail de guidage (103) par le premier dispositif d'entraînement (105a), et le dispositif d'entraînement comprend un deuxième dispositif d'entraînement (105b) configuré de façon à entraîner le deuxième module émetteur-récepteur à ondes millimétriques (102) directement, le deuxième module émetteur-récepteur à ondes millimétriques (102) étant raccordé au deuxième dispositif à rail de guidage (104) par le deuxième dispositif d'entraînement (105b), et
où l'instant où la première matrice d'antennes d'émetteur-récepteur à ondes millimétriques transmet des ondes millimétriques est différent de l'instant où la deuxième matrice d'antennes d'émetteur-récepteur à ondes millimétriques transmet des ondes millimétriques, au cours d'une période complète de balayage de l'objet à inspecter par à la fois le premier module émetteur-récepteur à ondes millimétriques (101) et le deuxième module émetteur-récepteur à ondes millimétriques (102).

11. Le procédé selon la Revendication 10, **caractérisé par**, après la génération de l'image holographique à ondes millimétriques du corps humain ou l'article, l'exécution d'une identification automatique dans le but d'identifier si le corps humain ou l'article comporte des objets suspects ainsi que la position des objets suspects, et la production des résultats identifiés.
